(19) Europäisches Patentamt / European Patent Office / Office européen des brevets

(11) **EP 4 761 387 A1**

## (12) EUROPEAN PATENT APPLICATION
published in accordance with Art. 153(4) EPC

(43) Date of publication:
**17.06.2026 Bulletin 2026/25**

(21) Application number: **23948772.1**

(22) Date of filing: **11.08.2023**

(51) International Patent Classification (IPC):
**H04W 52/36** (2009.01)

(52) Cooperative Patent Classification (CPC):
**H04W 52/14; H04W 52/36**

(86) International application number:
**PCT/CN2023/112773**

(87) International publication number:
**WO 2025/035337 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **LUO, Xingyi
Beijing 100085 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(54) **POWER HEADROOM REPORTING METHODS, TERMINALS, NETWORK DEVICES AND STORAGE MEDIUM**

(57) The present disclosure relates to method for reporting PHs, terminals, network devices, and a storage medium. A method for reporting power headroom comprises: determining at least one PH of a terminal, wherein the at least one PH is at least one PH of at least one antenna panel; and sending first information, wherein the first information comprises the power headroom. The present disclosure determines the power headroom corresponding to different antenna panels on the terminal and reports same, such that the a network device can perform more accurate power adjustment on different TRPs or antenna panels according to the reported power headroom, thereby improving the throughput of a communication system.

S3101: determining at least one PH of a terminal

S3102: sending first information (e.g., PHR)

Fig.3

## Description

### FIELD

The present disclosure relates to the field of communication technologies, and in particular, to a method for reporting PH, a terminal, a network device and a storage medium.

### BACKGROUND

In the related art, in an uplink communication scenario with multiple transmission reception points (M-TRP), simultaneous uplink communication by multiple antenna panels and multiple transmission reception points (TRPs) is considered, that is, a simultaneous multiple panels uplink transmission (STxMP).

### SUMMARY

For the STxMP scenario, if independent power control is performed for different antenna panels or TRPs, there is currently no clear solution on how to determine the power headroom of respective antenna panel or TRP.

Embodiments of the present disclosure propose a method for reporting PH, a terminal, a network device, and a storage medium.

According to a first aspect of the embodiments of the present disclosure, a power headroom (PH) reporting method is provided. The method includes: determining at least one PH of a terminal, where the at least one PH is at least one PH of at least one antenna panel; and sending first information, where the first information includes the at least one PH.

According to a second aspect of the embodiments of the present disclosure, a method for reporting PH is provided. The method includes: receiving first information, where the first information includes at least one PH, and the at least one PH is at least one PH of at least one antenna panel of a terminal.

According to a third aspect of the embodiments of the present disclosure, a method for reporting PH is provided. The method includes: a terminal determining at least one PH, where the at least one PH is at least one PH of at least one antenna panel; the terminal sending first information, where the first information includes the at least one PH; and a network device receiving the first information.

According to a fourth aspect of the embodiments of the present disclosure, a terminal is provided. The terminal includes: a transceiver module and a processing module. The processing module is configured to determine at least one PH of the terminal, where the at least one PH is at least one PH of at least one antenna panel. The transceiver module is configured to send first information, where the first information includes the at least one PH.

According to a fifth aspect of the embodiments of the present disclosure, a network device is provided. The network device includes: a transceiver module. The transceiver module is configured to receive first information, where the first information includes at least one PH, and the at least one PH is at least one PH of at least one antenna panel of a terminal.

According to a sixth aspect of the embodiments of the present disclosure, a terminal is provided. The terminal includes: one or more processors. The terminal is configured to perform the power headroom reporting method according to any one of the first aspect.

According to a seventh aspect of the embodiments of the present disclosure, a network device is provided. The network device includes: one or more processors. The network device is configured to perform the power headroom reporting method according to any one of the second aspect.

According to an eighth aspect of the embodiments of the present disclosure, a communication system is provided. The communication system includes a terminal and a network device, where the terminal is configured to perform the power headroom reporting method according to any one of the first aspect, and the network device is configured to perform the power headroom reporting method according to any one of the second aspect.

According to a ninth aspect of the embodiments of the present disclosure, a storage medium is provided. The storage medium stores instructions which, when run on a communication device, cause the communication device to perform the power headroom reporting method according to any one of the first aspect or any one of the second aspect.

According to the present disclosure, by determining and reporting the power headroom corresponding to different antenna panels on the terminal, enables the network device to perform more accurate power adjustment for different TRPs or antenna panels based on the reported power headroom, thereby improving the throughput of the communication system.

### BRIEF DESCRIPTION OF THE DRAWINGS

To describe the technical solutions in the embodiments of the present disclosure more clearly, the following briefly introduces the drawings required for describing the embodiments. The following drawings are merely some embodiments of the present disclosure, and do not specifically limit the scope of the present disclosure.

FIG. 1a is a schematic diagram of a communication system architecture according to an embodiment of the present disclosure.

FIG. 1b is a schematic diagram of a communication scenario according to an embodiment of the present disclosure.

FIG. 2 is an interaction diagram of a method for reporting PH according to an embodiment of the present disclosure.

FIG. 3 is a flowchart of a method for reporting PH according to an embodiment of the present disclosure.

FIG. 4 is a flowchart of another method for reporting PH according to an embodiment of the present disclosure.

FIG. 5a is a schematic diagram of an apparatus for reporting PH according to an embodiment of the present disclosure.

FIG. 5b is a schematic diagram of another apparatus for reporting PH according to an embodiment of the present disclosure.

FIG. 6a is a schematic diagram of a device for reporting PH according to an embodiment of the present disclosure.

FIG. 6b is a schematic diagram of a chip according to an embodiment of the present disclosure.

## DETAILED DESCRIPTION

Embodiments of the present disclosure propose a method for reporting PH, a terminal, a network device, and a storage medium.

In a first aspect, an embodiment of the present disclosure proposes a method for reporting PH. The method includes: determining at least one PH of a terminal, where the at least one PH is at least one PH of at least one antenna panel; and sending first information, where the first information includes the at least one PH.

In the above embodiment, by determining and reporting the power headroom corresponding to different antenna panels on the terminal to the network device, the network device can perform more accurate power adjustment for different TRPs or antenna panels based on the reported power headroom, thereby improving the throughput of the communication system.

In some embodiments of the first aspect, the at least one PH is determined based on one or more maximum transmit powers, and the maximum transmit powers correspond to at least one antenna panel.

In the above embodiment, the power headroom can be determined based on one or more maximum transmit powers corresponding to at least one antenna panel, so as to determine and report the power headroom corresponding to different antenna panels. The network device can perform more accurate power adjustment for different TRPs or antenna panels based on the reported power headroom, thereby improving the throughput of the communication system.

In some embodiments of the first aspect, the at least one PH is determined based on a first maximum transmit power, and the first maximum transmit power is a total maximum transmit power of a plurality of antenna panels.

In the above embodiment, the power headroom can be determined based on a maximum transmit power corresponding to a plurality of antenna panels, so as to determine and report the power headroom corresponding to different antenna panels. The network device can perform more accurate power adjustment for different TRPs or antenna panels based on the reported power headroom, thereby improving the throughput of the communication system.

In some embodiments of the first aspect, the at least one PH is a first PH, and the first PH is determined based on the first maximum transmit power and transmit powers of physical uplink shared channels (PUSCHs) corresponding to different antenna panels respectively.

In the above embodiment, the terminal can report one power headroom, which is determined based on the transmit powers of different antenna panels. The network device can perform more accurate power adjustment for different TRPs or antenna panels based on the reported power headroom, thereby improving the throughput of the communication system.

In some embodiments of the first aspect, the at least one PH are a plurality of second PHs, and the plurality of second PHs are PHs of different antenna panels respectively. The method further includes: for an R-th antenna panel among the at least one antenna panel, determining a second PH corresponding to the R-th antenna panel based on a transmit power corresponding to the R-th antenna panel, the first maximum transmit power and a quantity of antenna panels, where R is a positive integer.

In the above embodiment, the terminal can report power headrooms corresponding to different antenna panels respectively. This allows the network device to perform more accurate power adjustment for different TRPs or antenna panels based on the reported power headrooms, thereby improving the throughput of the communication system.

In some embodiments of the first aspect, the at least one PH is determined based on a plurality of second maximum transmit powers. The at least one PH are a plurality of third PHs, the plurality of third PHs are PHs of different antenna panels respectively, the plurality of third PHs are determined based on different second maximum transmit powers respectively, and the plurality of second maximum transmit powers are maximum transmit powers of the different antenna panels respectively. For an R-th antenna panel among the at least one antenna panel, a third PH corresponding to the R-th antenna panel is determined based on a transmit power corresponding to the R-th antenna panel and a second maximum transmit power corresponding to the R-th antenna panel, where R is a positive integer.

In the above embodiment, the power headroom can be determined based on a plurality of maximum transmit powers each corresponding to one antenna panel, so as to determine and report the power headroom corresponding to different antenna panels. The network device can perform more accurate power adjustment for different TRPs or antenna panels based on the reported power headroom, thereby improving the throughput of the communication system.

In some embodiments of the first aspect, where an actual PUSCH is currently being transmitted, the at least one PH is determined according to a first transmit power of the actual PUSCH transmitted, and the first transmit power is determined according to a power control parameter of the actual PUSCH.

In the above embodiment, the power headroom can be determined according to the transmit power of the actually transmitted PUSCH and reported. This is applicable to scenarios where an actual PUSCH exists, allowing the network device to perform more accurate power adjustment for different TRPs or antenna panels based on the reported power headroom, thereby improving the throughput of the communication system.

In some embodiments of the first aspect, where no PUSCH is transmitted, the at least one PH is determined according to a second transmit power of a reference PUSCH.

In the above embodiment, the power headroom can be determined according to the transmit power of a reference PUSCH and reported. This is applicable to scenarios where no actual PUSCH exists, allowing the network device to perform more accurate power adjustment for different TRPs or antenna panels based on the reported power headroom, thereby improving the throughput of the communication system.

In some embodiments of the first aspect, the PHs of the different antenna panels are determined according to a second transmit power of a same reference PUSCH.

In the above embodiment, the same second transmit power can be used as the transmit power for different antenna panels. The network device can perform more accurate power adjustment for different TRPs or antenna panels based on the reported power headroom, thereby improving the throughput of the communication system.

In some embodiments of the first aspect, the second transmit power of the same reference PUSCH is determined by at least one of the following methods: determining according to a specific power configuration parameter in a power configuration parameter list; determining according to a power configuration parameter associated with a specific transmission configuration indication (TCI) state identity in a TCI state list; or determining through a specific power configuration parameter set configured via radio resource control (RRC) message.

In the above embodiment, multiple determination methods for the same second transmit power are provided, applicable to determining the power headroom according to the same transmit power in different scenarios.

In some embodiments of the first aspect, the PHs of the different antenna panels are determined according to second transmit powers of reference PUSCHs of respective antenna panels.

In the above embodiment, a method for determining the transmit powers of different antenna panels is provided. This allows determining and reporting the power headroom based on the transmit powers of different antenna panels. The network device can perform more accurate power adjustment for different TRPs or antenna panels based on the reported power headroom, thereby improving the throughput of the communication system.

In some embodiments of the first aspect, for a single downlink control information (S-DCI) communication scheme, the second transmit powers of different reference PUSCHs are determined according to power control parameters of respective antenna panels, different power control parameters are associated with TCI states, and the different power control parameters are determined by specific codepoints in a media access control control element (MAC CE) used to activate the TCI states.

In the above embodiment, a method for determining second transmit powers for different antenna panels in scenarios where no actual PUSCH exists and for the S-DCI communication scheme is provided. This allows the network device to perform more accurate power adjustment for different TRPs or antenna panels based on the reported power headroom in such scenarios, thereby improving the throughput of the communication system.

In some embodiments of the first aspect, for a multiple downlink control information (M-DCI) communication scheme, the second transmit powers of different reference PUSCHs are determined according to power control parameters of respective antenna panels, different power control parameters are associated with TCI states, and the different power control parameters are determined by specific control resource sets having a same control resource set pool index.

In the above embodiment, a method for determining second transmit powers for different antenna panels in scenarios where no actual PUSCH exists and for the M-DCI communication scheme is provided. This allows the network device to perform more accurate power adjustment for different TRPs or antenna panels based on the reported power headroom in such scenarios, thereby improving the throughput of the communication system.

In some embodiments of the first aspect, the different power control parameters are not associated with TCI states, and the different power control parameters are determined based on a specific power configuration parameter set configured through an RRC message.

In the above embodiment, a method for determining power control parameters in scenarios where power control parameters are not associated with TCI states is provided. This enables determining the transmit powers of different antenna panels based on corresponding power control parameters in such scenarios, thereby obtaining and reporting the power headroom. The network device can perform more accurate power adjustment for different TRPs or antenna panels based on the reported power headroom, thereby improving the throughput of the communication system.

According to a second aspect of the embodiments of the present disclosure, a method for reporting PH is provided. The method includes: receiving first information, where the first information includes at least one PH, and the at least one PH is at least one PH of at least one antenna panel of a terminal.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

In some embodiments of the second aspect, the at least one PH is determined based on one or more maximum transmit powers, and the maximum transmit powers correspond to at least one antenna panel of the terminal.

In some embodiments of the second aspect, the at least one PH is determined based on a first maximum transmit power, and the first maximum transmit power is a total maximum transmit power of a plurality of antenna panels of the terminal.

In some embodiments of the second aspect, the at least one PH is a first PH, and the first PH is determined based on the first maximum transmit power and transmit powers of physical uplink shared channels (PUSCHs) corresponding to different antenna panels of the terminal respectively.

In some embodiments of the second aspect, the at least one PH are a plurality of second PHs, and the plurality of second PHs are PHs of different antenna panels respectively of the terminal respectively. A second PH corresponding to an R-th antenna panel among the at least one antenna panel of the terminal is determined based on a transmit power corresponding to the R-th antenna panel, the first maximum transmit power and a quantity of antenna panels of the terminal, where R is a positive integer.

In some embodiments of the second aspect, the at least one PH is determined based on a plurality of second maximum transmit powers. The at least one PH are a plurality of third PHs, the plurality of third PHs are PHs of different antenna panels respectively of the terminal respectively, the plurality of third PHs are determined based on different second maximum transmit powers respectively, and the different second maximum transmit powers are maximum transmit powers of different antenna panels of the terminal respectively. A third PH corresponding to an R-th antenna panel among the at least one antenna panel of the terminal is determined based on a transmit power corresponding to the R-th antenna panel and a second maximum transmit power corresponding to the R-th antenna panel, where R is a positive integer.

In some embodiments of the second aspect, an actual PUSCH is currently being transmitted, the at least one PH is determined according to a first transmit power of the actual PUSCH transmitted, and the first transmit power is determined according to a power control parameter of the actual PUSCH.

In some embodiments of the second aspect, no PUSCH is transmitted, the at least one PH is determined according to a second transmit power of a reference PUSCH.

In some embodiments of the second aspect, the PHs of the different antenna panels of the terminal are determined according to a second transmit power of a same reference PUSCH.

In some embodiments of the second aspect, the second transmit power of the same reference PUSCH is determined by at least one of the following methods: determining according to a specific power configuration parameter in a power configuration parameter list; determining according to a power configuration parameter associated with a specific transmission configuration indication (TCI) state identity in a TCI state list; or determining through a specific power configuration parameter set configured via radio resource control (RRC).

In some embodiments of the second aspect, the at least one PH comprises a plurality of PHs, and the PHs of the different antenna panels of the terminal are determined according to second transmit powers of reference PUSCHs of respective antenna panels.

In some embodiments of the second aspect, for a single downlink control information (S-DCI) communication scheme, the second transmit powers of different reference PUSCHs are determined according to power control parameters of respective antenna panels of the terminal, different power control parameters are associated with TCI states, and the different power control parameters are determined by specific codepoints in a media access control control element (MAC CE) used to activate the TCI states.

In some embodiments of the second aspect, for a multiple downlink control information (M-DCI) communication scheme, the second transmit powers of different reference PUSCHs are determined according to power control parameters of respective antenna panels of the terminal, different power control parameters are associated with TCI states, and the different power control parameters are determined by specific control resource sets having a same control resource set pool index.

In some embodiments of the second aspect, the different power control parameters are not associated with TCI states, and the different power control parameters are determined based on a specific power configuration parameter set configured through an RRC message.

According to a third aspect of the embodiments of the present disclosure, a method for reporting PH is provided. The method includes: a terminal determining at least one PH, where the at least one PH is at least one PH of at least one antenna panel; the terminal sending first information, where the first information includes the at least one PH; and a network device receiving the first information.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a fourth aspect of the embodiments of the present disclosure, a terminal is provided. The terminal includes: a transceiver module and a processing module. The processing module is configured to determine at least one PH of the terminal, where the at least one PH is at least one PH of at least one antenna panel. The transceiver module is configured to send first information, where the first information includes the at least one PH.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a fifth aspect of the embodiments of the present disclosure, a network device is provided. The network device includes: a transceiver module. The transceiver module is configured to receive first information, where the first information includes at least one PH, and the at least one PH is at least one PH of at least one antenna panel of a terminal.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a sixth aspect of the embodiments of the present disclosure, a terminal is provided. The terminal includes: one or more processors. The terminal is configured to perform the power headroom reporting method according to any one of the first aspect.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a seventh aspect of the embodiments of the present disclosure, a network device is provided. The network device includes: one or more processors. The network device is configured to perform the power headroom reporting method according to any one of the second aspect.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to an eighth aspect of the embodiments of the present disclosure, a communication system is provided. The communication system includes a terminal and a network device, where the terminal is configured to perform the power headroom reporting method according to any one of the first aspect, and the network device is configured to perform the power headroom reporting method according to any one of the second aspect.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a ninth aspect of the embodiments of the present disclosure, a storage medium is provided. The storage medium stores instructions which, when run on a communication device, cause the communication device to perform the power headroom reporting method according to any one of the first aspect or any one of the second aspect.

In the above embodiment, by determining and reporting the power headroom corresponding to different antenna panels on the terminal, the network device can perform more accurate power adjustment for different TRPs or antenna panels based on the reported power headroom, thereby improving the throughput of the communication system.

According to a tenth aspect of the embodiments of the present disclosure, the present disclosure proposes a program product. When the program product is executed by a communication device, the communication device is caused to perform the method described in the optional implementations of the first aspect or the second aspect.

According to an eleventh aspect of the embodiments of the present disclosure, the present disclosure proposes a computer program. When the computer program is run on a computer, the computer is caused to perform the method described in the optional implementations of the first aspect or the second aspect.

According to a twelfth aspect of the embodiments of the present disclosure, the present disclosure provides a chip or a chip system. The chip or chip system includes processing circuitry configured to perform the method described in the optional implementations of the first aspect or the second aspect.

It can be understood that the terminals, access network devices, first network elements, other network elements, core network devices, communication systems, storage media, program products, computer programs, chips, or chip systems involved in the various embodiments of the present disclosure are all used to perform the methods proposed in the embodiments of the present disclosure. Therefore, the beneficial effects that can be achieved can be referred to the beneficial effects in the corresponding methods, and details are not repeated here.

The embodiments of the present disclosure propose a method for reporting PH, a terminal, a network device, and a storage medium. In some embodiments, terms such as power headroom reporting method, information processing method, and power headroom reporting method can be used interchangeably; terms such as communication apparatus, information processing apparatus, and communication apparatus can be used interchangeably; and terms such as information processing system and communication system can be used interchangeably.

The embodiments of the present disclosure are not exhaustive, but merely illustrative of some embodiments, and are not intended to specifically limit the protection scope of the present disclosure. Where there is no contradiction, each step in a certain embodiment can be implemented as an independent embodiment, and the steps can be combined arbitrarily. For example, a solution obtained by removing some steps from a certain embodiment can also be implemented as an independent embodiment, and the order of the steps in a certain embodiment can be arbitrarily exchanged. In addition, optional implementations in a certain embodiment can be combined arbitrarily. Furthermore, the embodiments can be combined arbitrarily. For example, part or all of the steps of different embodiments can be combined arbitrarily, and a certain embodiment can be arbitrarily combined with optional implementations of other embodiments.

In the various embodiments of the present disclosure, unless otherwise specified and in case of logical conflicts, the terms and/or descriptions among the embodiments are consistent and can refer to each other. Technical features in different embodiments can be combined according to their intrinsic logical relationships to form new embodiments.

The terms used in the embodiments of the present disclosure are for the purpose of describing particular embodiments only and are not intended to limit the present disclosure.

In the embodiments of the present disclosure, unless otherwise stated, elements expressed in the singular form, such as "a", "an", "the", "the above-mentioned", "the ", "the aforementioned", "this", etc., may mean "one and only one", or may also mean "one or more", "at least one", etc. For example, when translating using articles such as "a", "an", "the" in English, the noun following the article can be understood as singular or plural.

In the embodiments of the present disclosure, "a plurality of" means two or more.

In some embodiments, terms such as "at least one of", "one or more", "a plurality of", "multiple" can be used interchangeably.

In some embodiments, expressions such as "at least one of A and B", "A and/or B", "A in one case, B in another case", "responding to case A, responding to case B", etc., may, depending on the situation, include the following technical solutions: in some embodiments A (performing A independently of B); in some embodiments B (performing B independently of A); in some embodiments selecting between A and B (A and B are selectively performed); in some embodiments both A and B (both A and B are performed). When there are more branches such as A, B, C, etc., it is similar to the above.

In some embodiments, expressions such as "A or B", etc., may, depending on the situation, include the following technical solutions: in some embodiments A (performing A independently of B); in some embodiments B (performing B independently of A); in some embodiments selecting between A and B (A and B are selectively performed). When there are more branches such as A, B, C, etc., it is similar to the above.

Prefixes such as "first", "second", etc., in the embodiments of the present disclosure are only for distinguishing different objects of description, and do not impose limitations on the position, order, priority, quantity, or content of the described objects. The description of the objects refers to the description in the claims or the context of the embodiments, and should not constitute unnecessary limitations due to the use of prefixes. For example, if the described object is "field", then the ordinal numbers before "field" in "first field" and "second field" do not limit the position or order between the "fields". "First" and "second" do not limit whether the "fields" they modify are in the same message, nor the sequence of "first field" and "second field". As another example, if the described object is "level", then the ordinal numbers before "level" in "first level" and "second level" do not limit the priority between the "levels". As another example, the quantity of the described object is not limited by the ordinal numbers; it can be one or more. Taking "first device" as an example, the quantity of "device" can be one or more. In addition, objects modified by different prefixes can be the same or different. For example, if the described object is "device", then "first device" and "second device" can be the same device or different devices, and their types can be the same or different. As another example, if the described object is "information", then "first information" and "second information" can be the same information or different information, and their content can be the same or different.

In some embodiments, expressions such as "including A", "containing A", "indicating A", "carrying A" can be interpreted as directly carrying A, or indirectly indicating A.

In some embodiments, terms such as "in response to ...", "in response to determining ...", "in a case of ...", "when ...", "if ..." can be used interchangeably.

In some embodiments, terms such as "greater than", "greater than or equal to", "not less than", "more than", "more than or equal to", "not fewer than", "higher than", "higher than or equal to", "not lower than", "above" can be used interchangeably. Terms such as "less than", "less than or equal to", "not greater than", "fewer than", "fewer than or equal to", "not more than", "lower than", "lower than or equal to", "not higher than", "below" can be used interchangeably.

In some embodiments, an apparatus and a device can be interpreted as physical or virtual, and their names are not limited to the names recorded in the embodiments. In some cases, they can also be understood as "equipment", "device", "circuit", "network element", "node", "function", "unit", "section", "system", "network", "chip", "chip system", "entity", "subject", etc.

In some embodiments, "network" can be interpreted as an apparatus included in the network, for example, an access network device, a core network device, etc.

In some embodiments, "access network device (AN device)" may also be referred to as "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be referred to as "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc., should comply with the laws and regulations of the country where it is located.

In some embodiments, data, information, etc., may be obtained after obtaining user consent.

Furthermore, each element, each row, or each column in the tables of the embodiments of the present disclosure can be implemented as an independent embodiment. Any combination of elements, rows, or columns can also be implemented as an independent embodiment.

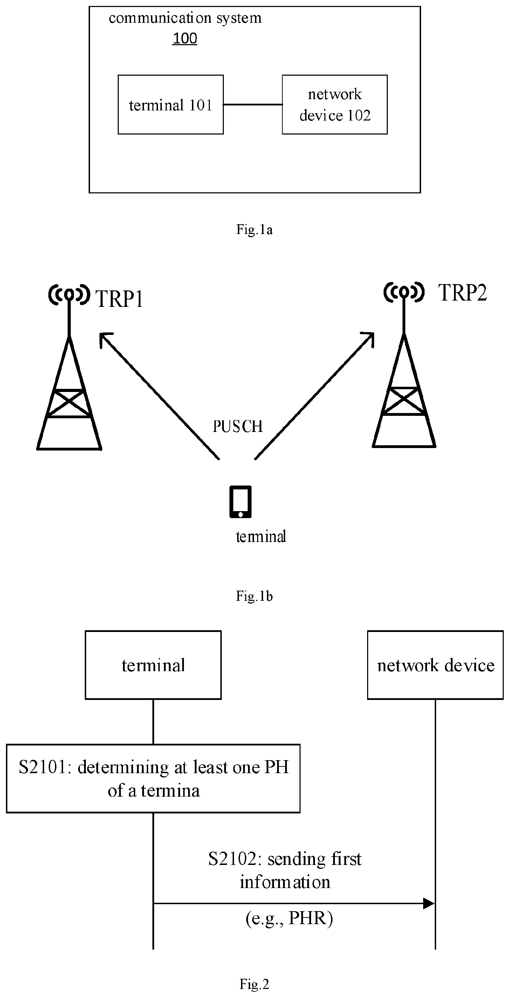

FIG. 1a is a schematic diagram of a communication system architecture according to an embodiment of the present disclosure.

As shown in FIG. 1a, a communication system 100 includes a terminal 101 and a network device 102.

In some embodiments, the terminal 101 includes, for example, at least one of a mobile phone, a wearable device, an Internet of Things device, a vehicle with communication capability, a smart car, a tablet computer (Pad), a computer with wireless transceiver capability, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, but is not limited thereto.

In some embodiments, the network device 102 may include at least one of an access network device and a core network device.

In some embodiments, the access network device is, for example, a node or device that connects a terminal to a wireless network. The access network device may include at least one of an evolved NodeB (eNB), a next generation evolved NodeB (ng-eNB), a next generation NodeB (gNB), a Node B (NB), a home NodeB (HNB), a home evolved NodeB (HeNB), a wireless backhaul device, a radio network controller (RNC), a base station controller (BSC), a base transceiver station (BTS), a baseband unit (BBU), a mobile switching center, a base station in 6G communication systems, an Open RAN, a Cloud RAN, a base station in other communication systems, an access node in Wi-Fi systems, but is not limited thereto.

In some embodiments, the technical solutions of the present disclosure can be applied to an Open RAN architecture. In this case, the interfaces between access network devices or within an access network device involved in the embodiments of the present disclosure may become internal interfaces of the Open RAN, and the processes and information interactions between these internal interfaces can be implemented through software or programs.

In some embodiments, an access network device may be composed of a central unit (CU) and a distributed unit (DU), where the CU may also be called a control unit. The CU-DU structure can split the protocol layers of the access network device, with the functions of some protocol layers placed in the CU for centralized control, and the remaining part or all of the protocol layer functions distributed in the DU, with the CU centrally controlling the DU, but not limited thereto.

In some embodiments, a core network device may be one device, including one or more network elements, or may be multiple devices or device groups, respectively including all or part of the above one or more network elements. Network elements may be virtual or physical. The core network includes, for example, at least one of an Evolved Packet Core (EPC), a 5G Core Network (5GCN), and a Next Generation Core (NGC).

It can be understood that the communication system described in the embodiments of the present disclosure is to illustrate the technical solutions of the embodiments of the present disclosure more clearly, and does not constitute a limitation on the technical solutions proposed in the embodiments of the present disclosure. Those of ordinary skill in the art will understand that as system architectures evolve and new service scenarios emerge, the technical solutions proposed in the embodiments of the present disclosure are equally applicable to similar technical problems.

The following embodiments of the present disclosure can be applied to the communication system 100 shown in FIG. 1a, or part of the entities, but are not limited thereto. The entities shown in FIG. 1a are illustrative. The communication system may include all or part of the entities in FIG. 1a, and may also include other entities not in FIG. 1a. The number and form of the entities are arbitrary, and the entities may be physical or virtual. The connection relationships between the entities are illustrative. The entities may be unconnected or connected, and the connection may be in any manner, either direct or indirect, and either wired or wireless.

The various embodiments of the present disclosure can be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, next-generation systems based on them, etc. In addition, a combination of multiple systems (e.g., a combination of LTE or LTE-A with 5G, etc.) can also be applied.

In the embodiments of the present disclosure, in the discussion of M-TRP uplink communication in Release 18, support for simultaneous uplink communication by multiple antenna panels and multiple TRPs is considered, i.e., STxMP. STxMP includes STxMP based on single downlink control information (S-DCI), i.e., S-DCI based STxMP; and STxMP based on multiple downlink control information (M-DCI), i.e., M-DCI based STxMP.

In some embodiments, in the power control of STxMP, in order for each TRP's uplink communication to have a suitable uplink transmit power, it is desired to perform respective power control based on each TRP. For example, in the scenario shown in FIG. 1b, the terminal wishes to perform respective power control for different TRPs, i.e., TRP1 and TRP2, and use respective uplink transmit powers to send the physical uplink shared channel (PUSCH).

In some embodiments, power control in uplink communication can be divided into open-loop power control and closed-loop power control. Closed-loop power control is where the network device dynamically adjusts subsequent uplink transmit power based on the received power of the last transmission to the network side. When adjusting the power, the network device needs to consider the power headroom (PH) of the terminal, i.e., the PH reported by the terminal in NR. That is, the network device cannot arbitrarily adjust the uplink transmit power.

In some embodiments, a method for calculating power headroom in an NR scenario is provided. For example, in a case where an actual PUSCH is transmitted, it can be determined by referring to the following formula.

$$PH = P_{CMAX} - \left\{ P_{0\_PUSCH}\left(j\right) + 10\log_{10}\left(2^{\mu} \cdot M_{RB}^{PUSCH}\right) + \alpha\left(j\right) \cdot PL\left(q_d\right) + \Delta + f\left(i, 1\right) \right\}$$

...... Formula 1

where the unit of PH is decibel (dB); $P_{CMAX}$ is the maximum transmit power determined by the terminal; $P_{0\_PUSCH}$ is the open-loop received power target value; $\alpha$ is a partial path loss compensation factor; PL is the estimated downlink path loss; f (i, 1) is the 1-th power control adjustment state value, which can also be called a closed-loop power control parameter; M is the bandwidth of the resource allocated for the PUSCH; $\Delta$ is other adjustments; $\mu$ represents the sub-carrier spacing (SCS) size.

In some embodiments, in a case where no actual PUSCH is transmitted, the power headroom can be determined via the power of a reference PUSCH, specifically the power headroom can be determined according to the following formula.

$$PH = \tilde{P}_{CMAX} - \left\{ P_{0\_PUSCH}\left(j\right) + \alpha\left(j\right) \cdot PL\left(q_d\right) + f\left(i, 1\right) \right\}$$

...... Formula 2

where, since there is no opportunity to transmit a PUSCH, the various parameters in Formula 2 take reference values. For example, $P_{0\_PUSCH}$, $\alpha$ take values corresponding to j=0, PL takes the value when $q_d$ is 0, and l in f (i, 1) is 0. $\tilde{P}_{CMAX}$ can be considered as the reference maximum transmit power.

In some embodiments, according to the above Formula 1 and Formula 2 for calculating power headroom, it can be seen that the calculation of power headroom is related to $P_{CMAX}$. That is, regardless of whether an actual PUSCH is transmitted, a maximum transmit power can be determined for the terminal. However, in the discussion of STxMP power control, the definition of $P_{CMAX}$ wmf is still undetermined. In some cases, it is clear that the power limitation of each terminal must be considered, but whether to introduce power limitation for each antenna panel and whether to additionally introduce power limitation over all panels of the terminal is undetermined.

In some embodiments, for STxMP power control, it is desired to perform power control based on TRP or antenna panel, and preferably to report multiple power headrooms based on TRP/antenna panel. However, in this case, how to calculate the power headroom cannot reuse the above Formula 1 and Formula 2.

FIG. 2 is an interaction diagram of a power headroom determination and reporting method according to an embodiment of the present disclosure. As shown in FIG. 2, the embodiment of the present disclosure relates to a method for reporting PH, used for the communication system 100. The method includes:

Step S2101, a terminal determines at least one PH of the termina.

In some embodiments, the terminal can determine its own power headroom. The at least one PH is at least one PH of at least one antenna panel on the terminal. It should be understood that there may be one or more TRPs/antenna panels on the terminal, and the terminal can determine power headroom for the multiple TPRs/antenna panels.

In some embodiments, the power headroom can also be considered as the power headroom for uplink transmission between the terminal and at least one TRP of the network device.

In some embodiments, the terminal sends uplink data to a TRP of the network device via an antenna panel. The terminal can also receive downlink data sent by a TRP of the network device via an antenna panel.

In some embodiments, an antenna panel is a set of antennas or an antenna combination that can form an uplink beam, i.e., can generate a highly directional uplink signal through analog precoding. The direction can be any direction, but an antenna panel can only send a signal in one direction at a time. An uplink beam can be indicated by a TCI, which contains a reference signal providing quasi co-location (QCL) type D information, or indicated by a sounding reference signal resource indicator (SRI). Therefore, an antenna panel can also be described as an uplink beam, and the power headroom of an antenna panel can also be the power headroom of an uplink transmission beam or an uplink transmission beam set. Or the power headroom of an antenna panel can also be the power headroom of a TCI state or a TCI state set.

It can be understood that the subsequent embodiments of the present disclosure are described using the antenna panel of the terminal as an example. But it should be understood that it can also be replaced with a TRP on the network device side, or an uplink transmission beam, uplink transmission beam set, TCI state, TCI state set, which is not limited in the present disclosure.

In some embodiments, the power headroom can be determined based on one or more maximum transmit powers, where the maximum transmit powers correspond to at least one antenna panel.

For example, in a case where the power headroom is determined based on one maximum transmit power, that maximum transmit power is the total maximum transmit power of multiple antenna panels on the terminal, or the total maximum transmit power of the terminal. This one maximum transmit power can be called a first maximum transmit power.

As another example, in a case where the power headroom is determined based on multiple maximum transmit powers, each of the multiple maximum transmit powers can be the maximum transmit power of one antenna panel on the terminal, or can be the maximum transmit power of each respective antenna panel on the terminal. Different maximum transmit powers correspond to different antenna panels on the terminal. The maximum transmit powers corresponding to different antenna panels respectively can be called second maximum transmit powers.

In some embodiments, the power headroom is determined based on one first maximum transmit power, where the first maximum transmit power is the total maximum transmit power of multiple antenna panels, or the first maximum transmit power is the maximum transmit power of the terminal.

For example, in the power control of STxMP, power control for each terminal, or additionally introducing a total transmit power limitation for all antenna panels on the terminal is considered. That is, in this case, there is only one total $P_{CMAX}$ for a terminal, which can be called a first $P_{CMAX}$ This first $P_{CMAX}$ corresponds to the total transmit power of all antenna panels on the terminal.

In some embodiments, in a case where the power headroom is determined based on one first maximum transmit power, the power headroom is one first PH. The first PH is determined based on the first maximum transmit power and transmit powers of PUSCHs corresponding to different antenna panels respectively.

For example, the power headroom is determined based on the first $P_{CMAX}$. Correspondingly, the terminal only reports one power headroom, which can be called a first PH. In this case, the first PH is determined based on the first $P_{CMAX}$ and the transmit powers of PUSCHs corresponding to different antenna panels respectively.

For example, assuming the terminal supports two antenna panels, and correspondingly the network device supports 2 TRPs. Here, P1 can be used as the transmit power of a PUSCH corresponding to one antenna panel, and P2 can be used as the transmit power of a PUSCH corresponding to the other antenna panel. Then the first PH can be determined by Formula 3.

$$PH = P_{CMAX} - \left( P_1 + P_2 \right)$$

...... Formula 3

It can be understood that PH in Formula 3 represents the first PH, and $P_{CMAX}$ in Formula 3 represents the first $P_{CMAX}$.

In some embodiments, terms such as "physical uplink shared channel (PUSCH)", "UL data", etc., can be used interchangeably.

In some embodiments, in a case where the power headroom is determined based on one first maximum transmit power, the power headroom is multiple second PHs. Different second PHs are power headrooms of different antenna panels on the terminal. For an R-th antenna panel among the at least one antenna panel, the terminal can determine a second PH corresponding to the R-th antenna panel based on the transmit power corresponding to the R-th antenna panel, the first maximum transmit power and the number of antenna panels. R is a positive integer.

For example, the power headroom is determined based on the first $P_{CMAX}$. Correspondingly, the terminal can report the power headroom corresponding to different antenna panels respectively. The power headroom corresponding to each antenna panel can be called a second PH. In this case, for each antenna panel, the second PH corresponding to that antenna panel can be determined based on the first $P_{CMAX}$ and the transmit power of the PUSCH corresponding to that antenna panel.

Assuming the terminal has 2 antenna panels, the second PH 1 corresponding to antenna panel 1 can be $\dfrac{P_{CMAX}}{2} - P_1$ ; the second PH 2 corresponding to antenna panel 2 can be $\dfrac{P_{CMAX}}{2} - P_2$ . It can be seen that if there are X antenna panels, the second PH corresponding to the X-th antenna panel can be $\dfrac{P_{CMAX}}{Y} - P_X$ , where $P_X$ represents the transmit power corresponding to the X-th antenna panel. Y represents the total number of antenna panels on the terminal. R takes any positive integer in [1, Y]. X and Y are any positive integers.

In some embodiments, the power headroom can be determined based on multiple second maximum transmit powers. That is, the power headroom may not be determined based on the total maximum transmit power of the terminal or the total maximum transmit power of all antenna panels on the terminal, but based on the respective maximum transmit powers of each antenna panel of the terminal. Different second maximum transmit powers are the maximum transmit powers of different antenna panels. That is, each second maximum transmit power is the maximum transmit power of one antenna panel. In this case, the power headroom is multiple third PHs. Different third PHs are power headrooms of different antenna panels, and the plurality of third PHs are determined based on different second maximum transmit powers respectively. For example, for an R-th antenna panel among the at least one antenna panels, the terminal can determine a third PH corresponding to the R-th antenna panel based on the transmit power corresponding to the R-th antenna panel (e.g., the transmit power of the PUSCH corresponding to the antenna panel) and/or the second maximum transmit power corresponding to the R-th antenna panel.

For example, in STxMP power control, power control per antenna panel is introduced. The second maximum transmit power corresponding to each antenna panel can be called a second $P_{CMAX}$. To better perform closed-loop power control for each antenna panel or each TRP, the terminal can report the power headroom of each TRP or each antenna panel.

For example, the power headroom of different antenna panels is determined based on the second $P_{CMAX}$ corresponding to that antenna panel. Correspondingly, the terminal can send the power headroom corresponding to different antenna panels respectively. In the case where each antenna panel has its own second maximum transmit power, the power headroom corresponding to each antenna panel can be called a third PH. For each antenna panel, the third PH corresponding to that antenna panel can be determined based on the second $P_{CMAX}$ and the transmit power of the PUSCH corresponding to that antenna panel.

Assuming the terminal has 2 antenna panels, the third PH 1 corresponding to antenna panel 1 can be $P_{CMAX,1}$ - $P_1$; the third PH 2 corresponding to antenna panel 2 can be $P_{CMAX,2}$ - $P_2$. Here, $P_{CMAX,1}$ represents the second $P_{CMAX}$ corresponding to antenna panel 1, and $P_{CMAX,2}$ represents the second $P_{CMAX}$ corresponding to antenna panel 2.

In some embodiments, for a case where an actual PUSCH is currently being transmitted, the power headroom can be determined according to a first transmit power of the actual PUSCH. The first transmit power is determined according to a power control parameter of the actual PUSCH.

In some embodiments, for a case where an actual PUSCH is currently being transmitted, the power headroom can be determined according to a first transmit power of the actual PUSCH and a first maximum transmit power. The first transmit power is determined according to a power control parameter of the actual PUSCH.

For example, in the case where an actual PUSCH is being transmitted, when the terminal only reports one power headroom, the first transmit powers corresponding to different antenna panels for determining that first PH can be determined according to the power control parameters of each antenna panel.

As another example, in the case where an actual PUSCH is being transmitted, when the terminal can report power headrooms corresponding to different antenna panels respectively, the first transmit powers for the second PHs corresponding to different antenna panels can be determined according to power control parameters associated with TCI states indicated for respective antenna panels.

In some embodiments, for a case where an actual PUSCH is currently being transmitted, the power headroom can be determined according to a first transmit power of the actual PUSCH and second maximum transmit powers corresponding to different antenna panels. The first transmit power is determined according to a power control parameter of the actual PUSCH.

As yet another example, in the case where an actual PUSCH is being transmitted, when the terminal can report power headrooms corresponding to different antenna panels respectively, the first transmit powers for the third PHs corresponding to different antenna panels can be determined according to power control parameters configured for each antenna panel via radio resource control (RRC).

In some embodiments, the power control parameters may include at least one of $P_{0\_PUSCH}$, $\alpha$, a pathloss reference signal (PL-RS), and a closed loop index.

In some embodiments, for a case where no actual PUSCH is transmitted, the power headroom can be determined according to a second transmit power of a reference PUSCH. The second transmit power can be determined by selecting different power control parameters according to different situations.

In some embodiments, in a case where no actual PUSCH is transmitted, transmit powers of different antenna panels can be determined according to a second transmit power of the same reference PUSCH.

For example, for different antenna panels of the terminal, the same power control parameters can be used to determine the transmit powers of different antenna panels.

In some embodiments, the second transmit power of the same reference PUSCH is determined according to a specific power configuration parameter in a power configuration parameter list.

For example, the same power control parameters can be a specific power configuration parameter in the power configuration parameter list. For instance, P1 and P2 can be determined according to the first power configuration parameter in the power configuration parameter list. Here, $P_{0\_PUSCH}$, $\alpha$ and PL-RS can be determined according to the first power configuration parameter in the power configuration parameter list, and the closed loop index defaults to 0. In this case, the determined P1 and P2 are the same.

In some embodiments, the second transmit power of the same reference PUSCH is determined according to a power configuration parameter associated with a specific TCI state identity in a TCI state list.

For example, the same power control parameters can be power configuration parameters associated with a specific TCI state identity in the TCI state list. For instance, P1 and P2 can be determined according to the power configuration parameter associated with the smallest TCI state identity in the TCI state list. In this case, the determined P1 and P2 are the same.

In some embodiments, the second transmit power of the same reference PUSCH is determined through a specific power configuration parameter set configured via RRC.

For example, if TCI states are not associated with power configuration parameters, then P1 and P2 can be determined according to one of the multiple power configuration parameter sets configured via RRC, e.g., the first power configuration parameter set. In this case, the determined P1 and P2 are the same.

In some embodiments, terms such as "certain", "preset", "pre-set", "set", "indicated", "a certain", "any", "first", etc., can be used interchangeably. "Specific A", "preset A", "pre-set A", "set A", "indicated A", "a certain A", "any A", "first A" can be interpreted as A pre-specified in protocols, etc., or as A obtained through setting, configuration, or indication, or as specific A, a certain A, any A, or first A, etc., but not limited thereto.

In some embodiments, in a case where no actual PUSCH is transmitted, transmit powers of different antenna panels can be determined according to second transmit powers of reference PUSCHs on respective antenna panels respectively.

For example, the second transmit power of a reference PUSCH on each respective antenna panel can be determined.

In some embodiments, in a case where no actual PUSCH is transmitted, for an S-DCI communication scheme, second transmit powers of different reference PUSCHs are determined according to power control parameters of respective antenna panels. Different power control parameters are associated with TCI states, and the different power control parameters can be determined by TCI states corresponding to specific codepoints in the TCI field of downlink control information (DCI) within the MAC CE used to activate TCI states.

For example, for S-DCI based STxMP, if power control parameters are associated with TCI states. Then it is stipulated that among the codepoints in the TCI field containing multiple different TCI states, the smallest codepoint contains multiple TCI-associated power control parameters, which are used to determine P1 and P2. For example, the number of multiple TCI states can be determined according to the number of antenna panels of the terminal, or the number of TRPs of the network device. For example, it could be 2.

Of course, the above is only an exemplary illustration using the smallest codepoint as a specific codepoint. Any other possible codepoint can also be used as a specific codepoint, which is not limited in the present disclosure.

In some embodiments, in a case where no actual PUSCH is transmitted, for an M-DCI communication scheme, second transmit powers of different reference PUSCHs can be determined according to power control parameters of respective antenna panels. Different power control parameters are associated with TCI states, and different TCI states are determined by TCI states of specific control resource sets corresponding to control resource set pool indexes (CORESETPoolIndex).

For example, for M-DCI based STxMP, if power control parameters are associated with TCI states, for different panels, the TCI state is the TCI state of the CORESET with the smallest identifier among all CORESETs having the same CORESETPoolIndex value as the CORESET corresponding to that antenna panel. And it is used to determine P1 and P2.

In some embodiments, the identifier can be an identity (ID) or an index.

In some embodiments, for the above S-DCI based STxMP or M-DCI based STxMP scenarios, different power control parameters are not associated with TCI states, and the different power control parameters can be stipulated to be determined via power configuration parameter sets configured for different antenna panels.

For example, if power control parameters are not associated with TCI states, then P1 and P2 can be determined via two power control parameter sets configured via RRC. For example, the multiple power control parameter sets are 2 power control parameter sets. Based on one of the 2 power control parameter sets, e.g., the first power control parameter set, P1 and P2 are determined.

It can be understood that in the formulas involved in the above embodiments, P1 and P2 are merely exemplary illustrations. They represent the transmit powers corresponding to each antenna panel or TRP in the case of 2 antenna panels or 2 TRPs. Of course, depending on the actual number of antenna panels or TRPs, more or fewer quantities of $P_X$ can be introduced, which is not limited in the present disclosure.

Step S2102, the terminal sends first information to the network device.

In some embodiments, the terminal sends first information to the network device.

In some embodiments, the network device receives the first information sent by the terminal.

In some embodiments, the first information includes the at least one PH determined in S2101.

In some embodiments, the first information can be a power headroom report (PHR).

In some embodiments, the terminal can be the terminal 101 mentioned above.

In some embodiments, the network device can be the network device 102 mentioned above.

In some embodiments, names of information, etc., are not limited to the names recorded in the embodiments. Terms such as "information", "message", "signal", "signaling", "report", "configuration", "indication", "instruction", "command", "channel", "parameter", "domain", "field", "symbol", "codebook", "codeword", "codepoint", "bit", "data", "program", "chip", etc., can be used interchangeably.

In some embodiments, the terminal sending information to the network device can be uplink communication.

In some embodiments, terms such as "uplink", "uplink link", "physical uplink", etc., can be used interchangeably.

In some embodiments, terms such as "obtain", "acquire", "get", "receive", "transmit", "bidirectional transmission", "send and/or receive" can be used interchangeably. They can be interpreted as receiving from another entity, obtaining from a protocol, obtaining from a higher layer, obtaining through its own processing, self-implementation, and other meanings.

In some embodiments, terms such as "send", "transmit", "report", "deliver", "transmit", "bidirectional transmission", "send and/or receive" can be used interchangeably.

The power headroom reporting method involved in the embodiments of the present disclosure can include at least one of steps S2101 to S2102. For example, step S2102 can be implemented as an independent embodiment, but not limited thereto.

In some embodiments, step S2101 is optional. In different embodiments, one or more of these steps may be omitted or replaced.

In some embodiments, other optional implementations recorded before or after the description corresponding to FIG. 2 can be referred to.

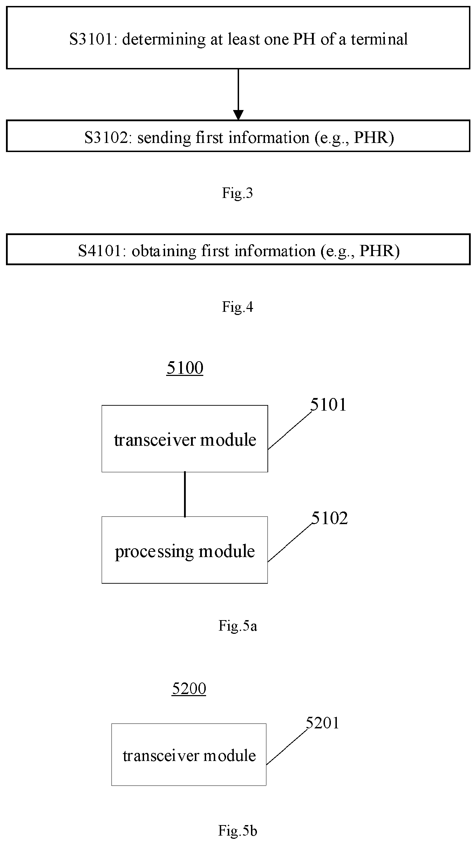

FIG. 3 is a flowchart of a method for reporting PH according to an embodiment of the present disclosure. As shown in FIG. 3, the embodiment of the present disclosure relates to a method for reporting PH, which can be executed on a terminal. The method includes:

Step S3101, determining at least one PH of a terminal.

Optional implementations of step S3101 can be referred to the optional implementations of step S2101 in FIG. 2, and other related parts in the embodiments involved in FIG. 2, which are not repeated here.

In some embodiments, the at least one PH is determined based on one or more maximum transmit powers, and the maximum transmit powers correspond to at least one antenna panel.

In some embodiments, the at least one PH is determined based on a first maximum transmit power, and the first maximum transmit power is a total maximum transmit power of a plurality of antenna panels.

In some embodiments, the at least one PH is a first PH, and the first PH is determined based on the first maximum transmit power and transmit powers of physical uplink shared channels (PUSCHs) corresponding to different antenna panels respectively.

In some embodiments, the at least one PH are a plurality of second PHs, and the plurality of second PHs are PHs of different antenna panels respectively. The method further includes: for an R-th antenna panel among the at least one antenna panel, determining a second PH corresponding to the R-th antenna panel based on a transmit power corresponding to the R-th antenna panel, the first maximum transmit power and a quantity of antenna panels, where R is a positive integer.

In some embodiments, the at least one PH is determined based on a plurality of second maximum transmit powers. The at least one PH are a plurality of third PHs, the plurality of third PHs are PHs of different antenna panels respectively, the plurality of third PHs are determined based on different second maximum transmit powers respectively, and the plurality of second maximum transmit powers are maximum transmit powers of the different antenna panels respectively. For an R-th antenna panel among the at least one antenna panel, a third PH corresponding to the R-th antenna panel is determined based on a transmit power corresponding to the R-th antenna panel and a second maximum transmit power corresponding to the R-th antenna panel, where R is a positive integer.

In some embodiments, an actual PUSCH is currently being transmitted, the at least one PH is determined according to a first transmit power of the actual PUSCH transmitted, and the first transmit power is determined according to a power control parameter of the actual PUSCH.

In some embodiments, no PUSCH is transmitted, the at least one PH is determined according to a second transmit power of a reference PUSCH.

In some embodiments, transmit powers of different antenna panels are determined according to a second transmit power of a same reference PUSCH.

In some embodiments, the second transmit power of the same reference PUSCH is determined by at least one of the following methods: determining according to a specific power configuration parameter in a power configuration parameter list; determining according to a power configuration parameter associated with a specific transmission configuration indication (TCI) state identity in a TCI state list; or determining through a specific power configuration parameter set configured via radio resource control (RRC).

In some embodiments, transmit powers of different antenna panels are determined according to second transmit powers of reference PUSCHs of respective antenna panels respectively.

In some embodiments, for a single downlink control information (S-DCI) communication scheme, second transmit powers of different reference PUSCHs are determined according to power control parameters of respective antenna panels. Different power control parameters are associated with TCI states, and the different power control parameters are determined by specific codepoints in a media access control control element (MAC CE) used to activate TCI states.

In some embodiments, for a multiple downlink control information (M-DCI) communication scheme, second transmit powers of different reference PUSCHs are determined according to power control parameters of respective antenna panels. Different power control parameters are associated with TCI states, and the different power control parameters are determined by specific control resource sets having a same control resource set pool index.

In some embodiments, different power control parameters are not associated with TCI states, and the different power control parameters are determined through a specific power configuration parameter set configured via RRC.

Step S3102, sending first information.

Optional implementations of step S3102 can be referred to the optional implementations of step S2102 in FIG. 2, and other related parts in the embodiments involved in FIG. 2, which are not repeated here.

FIG. 4 is a flowchart of yet another method for reporting PH according to an embodiment of the present disclosure. As shown in FIG. 4, the embodiment of the present disclosure relates to a method for reporting PH, which can be executed on a network device. The method includes:

Step S4101, obtaining first information.

Optional implementations of step S4101 can be referred to the optional implementations of step S2102 in FIG. 2, and other related parts in the embodiments involved in FIG. 2, which are not repeated here.

In some embodiments, the at least one PH is determined based on one or more maximum transmit powers, and the maximum transmit powers correspond to at least one antenna panel of the terminal.

In some embodiments, the at least one PH is determined based on a first maximum transmit power, and the first maximum transmit power is a total maximum transmit power of a plurality of antenna panels of the terminal.

In some embodiments, the at least one PH is a first PH, and the first PH is determined based on the first maximum transmit power and transmit powers of physical uplink shared channels (PUSCHs) corresponding to different antenna panels of the terminal respectively.

In some embodiments, the at least one PH are a plurality of second PHs, and the plurality of second PHs are PHs of different antenna panels respectively of the terminal respectively. A second PH corresponding to an R-th antenna panel among the at least one antenna panel of the terminal is determined based on a transmit power corresponding to the R-th antenna panel, the first maximum transmit power and a quantity of antenna panels of the terminal, where R is a positive integer.

In some embodiments, the at least one PH is determined based on a plurality of second maximum transmit powers. The at least one PH are a plurality of third PHs, the plurality of third PHs are PHs of different antenna panels respectively of the terminal respectively, the plurality of third PHs are determined based on different second maximum transmit powers respectively, and the different second maximum transmit powers are maximum transmit powers of different antenna panels of the terminal respectively. A third PH corresponding to an R-th antenna panel among the at least one antenna panel of the terminal is determined based on a transmit power corresponding to the R-th antenna panel and a second maximum transmit power corresponding to the R-th antenna panel, where R is a positive integer.

In some embodiments, an actual PUSCH is currently being transmitted, the at least one PH is determined according to a first transmit power of the actual PUSCH transmitted, and the first transmit power is determined according to a power control parameter of the actual PUSCH.

In some embodiments, no PUSCH is transmitted, the at least one PH is determined according to a second transmit power of a reference PUSCH.

In some embodiments, transmit powers of different antenna panels of the terminal are determined according to a second transmit power of a same reference PUSCH.

In some embodiments, the second transmit power of the same reference PUSCH is determined by at least one of the following methods: determining according to a specific power configuration parameter in a power configuration parameter list; determining according to a power configuration parameter associated with a specific transmission configuration indication (TCI) state identity in a TCI state list; or determining through a specific power configuration parameter set configured via radio resource control (RRC).

In some embodiments, transmit powers of different antenna panels of the terminal are determined according to second transmit powers of reference PUSCHs of respective antenna panels.

In some embodiments, for a single downlink control information (S-DCI) communication scheme, second transmit powers of different reference PUSCHs are determined according to power control parameters of respective antenna panels of the terminal. Different power control parameters are associated with TCI states, and the different power control parameters are determined by specific codepoints in a media access control control element (MAC CE) used to activate TCI states.

In some embodiments, for a multiple downlink control information (M-DCI) communication scheme, second transmit powers of different reference PUSCHs are determined according to power control parameters of respective antenna panels of the terminal. Different power control parameters are associated with TCI states, and the different power control parameters are determined by specific control resource sets having a same control resource set pool index.

In some embodiments, different power control parameters are not associated with TCI states, and the different power control parameters are determined through a specific power configuration parameter set configured via RRC.

Next, the present disclosure will describe the above solution with more detailed embodiments.

In some embodiments, in STxMP power control, only power control for each terminal is considered, or only a total transmit power limitation for all antenna panels is additionally introduced. For example, both can be recorded as $P_{CMAX}$.

In some embodiments, the terminal can report one PH value.

In some embodiments, for the actual PH where an actual PUSCH is transmitted, it can be calculated by Formula 3. Here, P1 and P2 are the transmit powers of each antenna panel determined according to two power control parameter sets indicated by the network device. For example, since at most 2 TRPs are supported, P1 and P2 are considered here.

In some embodiments, for the reference PH where no actual PUSCH is transmitted, it can be determined by the following methods.

In some embodiments, the two TRPs or antenna panels use the same power control parameters for determination.

In some embodiments, $P_{0\_PUSCH}$, $\alpha$, PL-RS can be determined by the first power configuration parameter in the configured power configuration parameter list, the closed loop index defaults to 0, thereby determining P1 and P2. In this case, P1 = P2, $PH = \hat{P}_{CMAX} - (P_1 + P_2)$, where $\hat{P}_{CMAX}$ represents the reference maximum transmit power. Alternatively, P1 and P2 are determined via $P_{0\_PUSCH}$, $\alpha$, PL-RS and the closed loop index associated with the smallest TCI state ID in the TCI state list. In this case, P1 = P2. If $P_{0\_PUSCH}$, $\alpha$ and the closed loop index are not associated with TCI states, then the terminal can determine P1 and P2 according to the first power control parameter set of the two power control parameter sets configured via RRC.

In some embodiments, the power control parameters of each TRP or antenna panel are determined independently.

In some embodiments, for S-DCI based STxMP, if the power control parameters { $P_{0\_PUSCH}$, $\alpha$, PL-RS, closed

loop index} are associated with TCI states, then the power control parameters associated with the two TCI states corresponding to the smallest codepoint among the codepoints that activate two TCI states in the MAC CE used to activate TCI states can be used to determine P1 and P2. If the power control parameters { $P_{0\_PUSCH}$, $\alpha$, PL-RS, closed loop index} are not associated with TCI states, then P1 and P2 can be determined via the two power control parameter sets configured via RRC. The final PH is $PH = \hat{P}_{CMAX} - (P_1 + P_2)$.

In some embodiments, for M-DCI based STxMP, if the power control parameters { $P_{0\_PUSCH}$, $\alpha$, PL-RS, closed loop index} are not associated with TCI states, the calculation method is the same as for S-DCI based STxMP. If the power control parameters { $P_{0\_PUSCH}$, $\alpha$, PL-RS, closed loop index} are associated with TCI states, the TCI state of the CORESET with the smallest ID among CORESETs having the same CORESETPoolIndex value is used to determine P1 and P2.

In some embodiments, the terminal can report the PH of each TRP or antenna panel.

In some embodiments, each antenna panel equally divides or allocates the power limitation $P_{CMAX}$ or $\hat{P}_{CMAX}$ in a certain proportion. It can be recorded as $P_{CMAX,1}$, $P_{CMAX,2}$, used to calculate the PH of each antenna panel or TRP. Here,

$$P_{CMAX,1} = P_{CMAX,2} = \frac{P_{CMAX}}{Y}.$$

In some embodiments, for the actual PH where an actual PUSCH is transmitted, it can be determined via

$$PH_1 = \frac{P_{CMAX}}{Y} - P_1, \text{ and } PH_2 = \frac{P_{CMAX}}{Y} - P_2.$$ Here, P1 and P2 are determined according to the power control parameters associated with the TCI states indicated for the two antenna panels or TRPs. Of course, the power control parameters { $P_{0\_PUSCH}$, $\alpha$, PL-RS, closed loop index} may also be directly configured via RRC.

In some embodiments, for the reference PH where no actual PUSCH is transmitted, it can be determined via

$$PH_1 = \frac{\hat{P}_{CMAX}}{Y} - P_1, \text{ and } PH_2 = \frac{\hat{P}_{CMAX}}{Y} - P_2.$$ The method for determining the reference powers P1 and P2 can refer to the above embodiments for the case where no actual PUSCH is transmitted, which is not repeated here.

In some embodiments, power control per antenna panel is introduced in STxMP power control. It can be recorded as $P_{CMAX,11}$, $P_{CMAX,21}$. To better perform closed-loop power control for each antenna panel or TRP, the terminal can report the PH of each TRP or antenna panel.

In some embodiments, for the actual PH where an actual PUSCH is transmitted, it can be determined via $PH_1 = P_{CMAX,11} - P_1$, and $PH_2 = P_{CMAX,21} - P_2$). Here, P1 and P2 are determined according to the power control parameters associated with the TCI states indicated for the two antenna panels or TRPs. The power control parameters { $P_{0\_PUSCH}$, $\alpha$, PL-RS, closed loop index} may also be directly configured via RRC.

In some embodiments, for the reference PH where no actual PUSCH is transmitted, it can be determined via $PH_1 = P_{CMAX,11} - P_1$, and $PH_2 = P_{CMAX,21} - P_2$. At this time, $P_{CMAX,11}$, $P_{CMAX,21}$ can refer to $\hat{P}_{CMAX}$ for determination. The method for determining P1 and P2 can refer to the above embodiments for the case where no actual PUSCH is transmitted, which is not repeated here.

In the embodiments of the present disclosure, each step can be implemented as an independent embodiment. Part or all of the steps, their optional implementations can be arbitrarily combined with part or all of the steps of other embodiments, and can also be arbitrarily combined with optional implementations of other embodiments.

The embodiments of the present disclosure also provide an apparatus for implementing any of the above methods. For example, an apparatus for reporting PH is provided. The apparatus includes units or modules for implementing the steps executed by the terminal in any of the above methods. As another example, another apparatus for reporting PH is provided, including units or modules for implementing the steps executed by a network device (e.g., an access network device, a core network function node, a core network device, etc.) in any of the above methods.

It should be understood that the division of units or modules in the above apparatus is only a division of logical functions. In actual implementation, they can be fully or partially integrated into one physical entity, or can be physically separate. In addition, the units or modules in the apparatus can be implemented in the form of software called by a processor: for example, the apparatus includes a processor, the processor is connected to a memory, instructions are stored in the memory, and the processor calls the instructions stored in the memory to implement any of the above methods or to implement the functions of the units or modules of the above apparatus, where the processor is, for example, a general-purpose processor, such as a Central Processing Unit (CPU) or microprocessor, and the memory is a memory inside or outside the apparatus. Alternatively, the units or modules in the apparatus can be implemented in the form of hardware circuits. The functions of some or all units or modules can be implemented through the design of the hardware circuits. The hardware circuits can be understood as one or more processors. For example, in one implementation, the hardware circuits are application-specific integrated circuits (ASICs), and by designing the logical relationships of the circuit elements, the functions of some or all of the units or modules described above are implemented. As another example, in another implementation, the hardware circuits can be implemented by programmable logic devices (PLDs). Taking Field Programmable Gate Arrays (FPGAs) as an example, they can include a large number of logic gates, and the connection relationships between the logic gates are configured through configuration files to implement the functions of some or all of the units or modules described above. All units or modules of the above apparatus can be fully implemented in the form of software called by a processor, or fully implemented in the form of hardware circuits, or partially implemented in the form of software called by a processor and the remaining part implemented in the form of hardware circuits.

In the embodiments of the present disclosure, a processor is a circuit with signal processing capability. In one implementation, the processor can be a circuit with instruction reading and execution capability, such as a Central Processing Unit (CPU), microprocessor, graphics processing unit (GPU) (which can be understood as a microprocessor), or digital signal processor (DSP), etc. In another implementation, the processor can implement certain functions through the logical relationships of hardware circuits. The logical relationships of the hardware circuits can be fixed or reconfigurable. For example, the processor can be a hardware circuit implemented by an application-specific integrated circuit (ASIC) or a programmable logic device (PLD), such as an FPGA. In reconfigurable hardware circuits, the process of the processor loading configuration files to implement hardware circuit configuration can be understood as the processor loading instructions to implement the functions of some or all of the units or modules described above. In addition, it can also be a hardware circuit designed for artificial intelligence, which can be understood as an ASIC, such as a Neural Network Processing Unit (NPU), Tensor Processing Unit (TPU), Deep learning Processing Unit (DPU), etc.

FIG. 5a is a schematic diagram of an apparatus for reporting PH according to an embodiment of the present disclosure. As shown in FIG. 5a, a communication apparatus 5100 can be, for example, the terminal mentioned above. The apparatus 5100 includes at least one of: a transceiver module 5101, a processing module 5102, etc. In some embodiments, the transceiver module 5101 is used to send first information. Optionally, the transceiver module 5101 is used to perform communication steps such as sending and/or receiving (e.g., step S2102) executed by the terminal in any of the above methods, but not limited thereto, and details are not repeated here. Optionally, the processing module 5102 is used to perform other steps (e.g., step S2101) executed by the terminal in any of the above methods, but not limited thereto, and details are not repeated here.

FIG. 5b is a schematic diagram of another apparatus for reporting PH according to an embodiment of the present disclosure. As shown in FIG. 5b, a communication apparatus 5200 can be, for example, the network device mentioned above. The apparatus 5200 includes: a transceiver module 5201. Of course, the apparatus 5200 can also include any possible modules such as a processing module, which is not limited in the present disclosure. In some embodiments, the transceiver module 5201 is used to receive first information. Optionally, the transceiver module 5201 is used to perform communication steps such as sending and/or receiving (e.g., step S2102) executed by the network device in any of the above methods, but not limited thereto, and details are not repeated here.

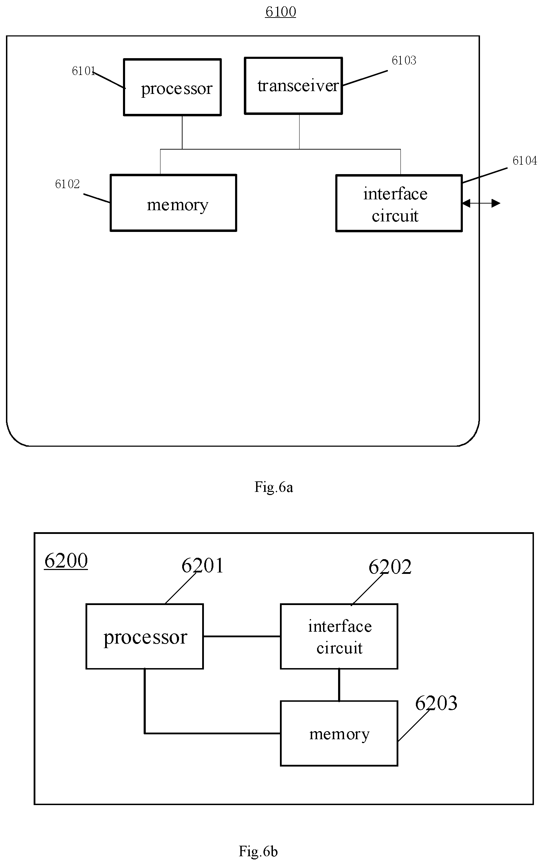

FIG. 6a is a structural diagram of a communication device 6100 according to an embodiment of the present disclosure. The communication device 6100 can be a network device (e.g., an access network device, a core network device, etc.), a terminal (e.g., a user equipment, etc.), a chip, chip system, or processor, etc., that supports the network device to implement any of the above methods, or a chip, chip system, or processor, etc., that supports the terminal to implement any of the above methods. The communication device 6100 can be used to implement the method described in the above method embodiments. For details, refer to the description in the above method embodiments.

As shown in FIG. 6a, the communication device 6100 includes one or more processors 6101. The processor 6101 can be a general-purpose processor or a special-purpose processor, etc., such as a baseband processor or a central processor. The baseband processor can be used to process communication protocols and communication data. The central processor can be used to control the communication device (e.g., a base station, baseband chip, terminal device, terminal device chip, DU or CU, etc.), execute programs, and process program data. The communication device 6100 is used to execute any of the above methods.

In some embodiments, the communication device 6100 further includes one or more memories 6102 for storing instructions. Optionally, all or part of the memories 6102 can also be outside the communication device 6100.

In some embodiments, the communication device 6100 further includes one or more transceivers 6103. When the communication device 6100 includes one or more transceivers 6103, the transceiver 6103 executes communication steps such as sending and/or receiving (e.g., step S2102) in the above method, but not limited thereto. The processor 6101 executes other steps (e.g., step S2101), but not limited thereto.

In some embodiments, a transceiver can include a receiver and/or a transmitter. The receiver and transmitter can be separate or integrated. Optionally, terms such as transceiver, transceiver unit, transceiver, transceiver circuit, etc., can be used interchangeably. Terms such as transmitter, transmitter unit, transmitter, transmitter circuit, etc., can be used interchangeably. Terms such as receiver, receiver unit, receiver, receiver circuit, etc., can be used interchangeably.

In some embodiments, the communication device 6100 can include one or more interface circuits 6104. Optionally, the interface circuit 6104 is connected to the memory 6102. The interface circuit 6104 can be used to receive signals from the memory 6102 or other devices, and can be used to send signals to the memory 6102 or other devices. For example, the interface circuit 6104 can read instructions stored in the memory 6102 and send the instructions to the processor 6101.

The communication device 6100 described in the above embodiments can be a network device or a terminal, but the scope of the communication device 6100 described in the present disclosure is not limited to this. The structure of the communication device 6100 is not limited by FIG. 6a. The communication device can be an independent device or part of a larger device. For example, the communication device can be: 1) an independent integrated circuit (IC), or chip, or chip system or subsystem; 2) a set of one or more ICs, optionally, the IC set may also include storage components for storing data and programs; 3) an ASIC, such as a modem (Modem); 4) a module that can be embedded in other devices; 5) a receiver, terminal device, smart terminal device, cellular phone, wireless device, handset, mobile unit, vehicle-mounted device, network device, cloud device, artificial intelligence device, etc.; 6) others, etc.

FIG. 6b is a structural diagram of a chip 6200 according to an embodiment of the present disclosure. For the case where the communication device 6100 can be a chip or chip system, refer to the structural diagram of the chip 6200 shown in FIG. 6b, but not limited thereto.

The chip 6200 includes one or more processors 6201. The chip 6200 is used to execute any of the above methods.

In some embodiments, the chip 6200 further includes one or more interface circuits 6202. Optionally, the interface circuit 6202 is connected to a memory 6203. The interface circuit 6202 can be used to receive signals from the memory 6203 or other devices, and can be used to send signals to the memory 6203 or other devices. For example, the interface circuit 6202 can read instructions stored in the memory 6203 and send the instructions to the processor 6201.

In some embodiments, the interface circuit 6202 executes communication steps such as sending and/or receiving (e.g., step S2102) in the above method, but not limited thereto. The processor 6201 executes other steps (e.g., step S2101), but not limited thereto.

In some embodiments, terms such as interface circuit, interface, transceiver pin, transceiver, etc., can be used interchangeably.

In some embodiments, the chip 6200 further includes one or more memories 6203 for storing instructions. Optionally, all or part of the memory 6203 can be outside the chip 6200.

The present disclosure also proposes a storage medium. The storage medium stores instructions which, when run on the communication device 6100, cause the communication device 6100 to perform any of the above methods. Optionally, the storage medium is an electronic storage medium. Optionally, the storage medium is a computer-readable storage medium, but not limited thereto. It can also be a storage medium readable by other devices. Optionally, the storage medium can be a non-transitory storage medium, but not limited thereto. It can also be a transitory storage medium.

The present disclosure also proposes a program product. When the program product is executed by the communication device 6100, it causes the communication device 6100 to perform any of the above methods. Optionally, the program product is a computer program product.

The present disclosure also proposes a computer program. When run on a computer, it causes the computer to perform any of the above methods.

The present disclosure provides a method for determining power headroom to support more precise power adjustment for each antenna panel or TRP in STxMP, providing system throughput without exceeding power limitations. Thereby supporting network devices to more accurately perform independent closed-loop power adjustment for each TRP.

**Claims**

1.    A method for reporting power headroom (PH), comprising:

     determining at least one PH of a terminal, wherein the at least one PH is at least one PH of at least one antenna panel; and
     sending first information, wherein the first information comprises the at least one PH.

2.    The method according to claim 1, wherein the at least one PH is determined based on one or more maximum transmit powers, and the one or more maximum transmit powers correspond to at least one antenna panel.

3.    The method according to claim 2, wherein the at least one PH is determined based on a first maximum transmit power, and the first maximum transmit power is a total maximum transmit power of a plurality of antenna panels.

4.    The method according to claim 3, wherein the at least one PH is a first PH, and the first PH is determined based on the first maximum transmit power and transmit powers of physical uplink shared channels (PUSCHs) corresponding to different antenna panels respectively.

5.    The method according to claim 3, wherein the at least one PH are a plurality of second PHs, the plurality of second PHs are PHs of different antenna panels respectively, and the method further comprises:
for an R-th antenna panel among the at least one antenna panel, determining a second PH corresponding to the R-th antenna panel based on a transmit power corresponding to the R-th antenna panel, the first maximum transmit power and a quantity of the different antenna panels, wherein R is a positive integer.

6. The method according to claim 2, wherein the at least one PH is determined based on a plurality of second maximum transmit powers, the at least one PH are a plurality of third PHs, the plurality of third PHs are PHs of different antenna panels respectively, the plurality of third PHs are determined based on different second maximum transmit powers respectively, and the plurality of second maximum transmit powers are maximum transmit powers of the different antenna panels respectively;
for an R-th antenna panel among the at least one antenna panel, determining a third PH corresponding to the R-th antenna panel based on a transmit power corresponding to the R-th antenna panel and a second maximum transmit power corresponding to the R-th antenna panel, wherein R is a positive integer.

7. The method according to any one of claims 4 to 6, wherein in a case where an actual PUSCH is transmitted, the at least one PH is determined according to a first transmit power of the actual PUSCH transmitted, and the first transmit power is determined according to a power control parameter of the actual PUSCH.

8. The method according to any one of claims 4 to 6, wherein in a case where no PUSCH is transmitted, the at least one PH is determined according to a second transmit power of a reference PUSCH.

9. The method according to claim 8, wherein the at least one PH comprises a plurality of PHs, and the PHs of the different antenna panels are determined according to a second transmit power of a same reference PUSCH.

10. The method according to claim 9, wherein the second transmit power of the same reference PUSCH is determined according to at least one of:

   a specific power configuration parameter in a power configuration parameter list;
   a power configuration parameter associated with a specific transmission configuration indication (TCI) state identity in a TCI state list; or
   a specific power configuration parameter set configured through a radio resource control (RRC) message.

11. The method according to claim 8, wherein the at least one PH comprises a plurality of PHs, and the PHs of the different antenna panels are determined according to second transmit powers of reference PUSCHs of respective antenna panels.

12. The method according to claim 11, wherein for a single downlink control information (S-DCI) communication scheme, the second transmit powers of different reference PUSCHs are determined according to power control parameters of respective antenna panels, different power control parameters are associated with TCI states, and the different power control parameters are determined by specific codepoints in a media access control control element (MAC CE) used to activate the TCI states.

13. The method according to claim 11, wherein for a multiple downlink control information (M-DCI) communication scheme, the second transmit powers of different reference PUSCHs are determined according to power control parameters of respective antenna panels, different power control parameters are associated with TCI states, and the different power control parameters are determined by specific control resource sets having a same control resource set pool index.

14. The method according to claim 12 or 13, wherein the different power control parameters are not associated with TCI states, and the different power control parameters are determined based on a specific power configuration parameter set configured through an RRC message.

15. A method for reporting power headroom (PH), comprising:
receiving first information, wherein the first information comprises at least one PH, and the at least one PH is at least one PH of at least one antenna panel of a terminal.

16. The method according to claim 15, wherein the at least one PH is determined based on one or more maximum transmit powers, and the one or more maximum transmit powers correspond to at least one antenna panel of the terminal.

17. The method according to claim 16, wherein the at least one PH is determined based on a first maximum transmit power, and the first maximum transmit power is a total maximum transmit power of a plurality of antenna panels of the terminal.

18. The method according to claim 17, wherein the at least one PH is a first PH, and the first PH is determined based on the first maximum transmit power and transmit powers of physical uplink shared channels (PUSCHs) corresponding to different antenna panels of the terminal respectively.

19. The method according to claim 17, wherein the at least one PH are a plurality of second PHs, and the plurality of second PHs are PHs of different antenna panels of the terminal respectively;
a second PH corresponding to an R-th antenna panel among the at least one antenna panel of the terminal is determined based on a transmit power corresponding to the R-th antenna panel, the first maximum transmit power and a quantity of the different antenna panels of the terminal, and R is a positive integer.

20. The method according to claim 16, wherein the at least one PH is determined based on a plurality of second maximum transmit powers, the at least one PH are a plurality of third PHs, the plurality of third PHs are PHs of different antenna panels of the terminal respectively, the plurality of third PHs are determined based on different second maximum transmit powers respectively, and the plurality of second maximum transmit powers are maximum transmit powers of the different antenna panels of the terminal respectively;
wherein a third PH corresponding to an R-th antenna panel among the at least one antenna panel of the terminal is determined based on a transmit power corresponding to the R-th antenna panel and a second maximum transmit power corresponding to the R-th antenna panel, and R is a positive integer.

21. The method according to any one of claims 18 to 20, wherein in a case where an actual PUSCH is transmitted, the at least one PH is determined according to a first transmit power of the actual PUSCH transmitted, and the first transmit power is determined according to a power control parameter of the actual PUSCH.

22. The method according to any one of claims 18 to 20, wherein in a case where no PUSCH is transmitted, the at least one PH is determined according to a second transmit power of a reference PUSCH.

23. The method according to claim 22, wherein the at least one PH comprises a plurality of PHs, and the PHs of the different antenna panels of the terminal are determined according to a second transmit power of a same reference PUSCH.

24. The method according to claim 23, wherein the second transmit power of the same reference PUSCH is determined according to at least one of:

a specific power configuration parameter in a power configuration parameter list;
a power configuration parameter associated with a specific transmission configuration indication (TCI) state identity in a TCI state list; or
a specific power configuration parameter set configured through a radio resource control (RRC) message.

25. The method according to claim 22, wherein the at least one PH comprises a plurality of PHs, and the PHs of the different antenna panels of the terminal are determined according to second transmit powers of reference PUSCHs of respective antenna panels.

26. The method according to claim 25, wherein for a single downlink control information (S-DCI) communication scheme, the second transmit powers of different reference PUSCHs are determined according to power control parameters of respective antenna panels of the terminal, different power control parameters are associated with TCI states, and the different power control parameters are determined by specific codepoints in a media access control control element (MAC CE) used to activate the TCI states.

27. The method according to claim 25, wherein for a multiple downlink control information (M-DCI) communication scheme, the second transmit powers of different reference PUSCHs are determined according to power control parameters of respective antenna panels of the terminal, different power control parameters are associated with TCI states, and the different power control parameters are determined by specific control resource sets having a same control resource set pool index.

28. The method according to claim 26 or 27, wherein the different power control parameters are not associated with TCI states, and the different power control parameters are determined based on a specific power configuration parameter set configured through an RRC message.

29. A method for reporting power headroom (PH), comprising:

determining, by a terminal, at least one PH, wherein the at least one PH is at least one PH of at least one antenna panel;
sending, by the terminal, first information, wherein the first information comprises the at least one PH; and
receiving, by a network device, the first information.

30. A terminal, comprising a transceiver module and a processing module, wherein

the processing module is configured to determine at least one PH of the terminal, and the at least one PH is at least one PH of at least one antenna panel; and
the transceiver module is configured to send first information, and the first information comprises the at least one PH.

31. A network device, comprising a transceiver module, wherein
the transceiver module is configured to receive first information, the first information comprises at least one PH, and the at least one PH is at least one PH of at least one antenna panel of a terminal.

32. A terminal, comprising one or more processors,
wherein the terminal is configured to perform the method for reporting power headroom (PH) according to any one of claims 1 to 14.

33. A network device, comprising one or more processors,
wherein the network device is configured to perform the method for reporting power headroom (PH) according to any one of claims 15 to 28.

34. A communication system, comprising a terminal and a network device, wherein the terminal is configured to perform the method for reporting power headroom (PH) according to any one of claims 1 to 14, and the network device is configured to perform the method for reporting PH according to any one of claims 15 to 28.

35. A storage medium, having stored therein instructions that, when running on a communication device, cause the communication device to perform the method for power headroom (PH) according to any one of claims 1 to 14 or 15 to 28.

communication system
100

terminal 101 — network device 102

Fig.1a

TRP1

TRP2

PUSCH

terminal

Fig.1b

terminal

network device

S2101: determining at least one PH of a termina

S2102: sending first information

(e.g., PHR)

Fig.2

S3101: determining at least one PH of a terminal

S3102: sending first information (e.g., PHR)

Fig.3

S4101: obtaining first information (e.g., PHR)

Fig.4

5100

transceiver module  5101

processing module  5102

Fig.5a

5200

transceiver module  5201

Fig.5b

<u>6100</u>

Fig.6a

Fig.6b

## INTERNATIONAL SEARCH REPORT

International application No.

**PCT/CN2023/112773**

### A. CLASSIFICATION OF SUBJECT MATTER

H04W 52/36(2009.01)i

According to International Patent Classification (IPC) or to both national classification and IPC

### B. FIELDS SEARCHED

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, WPABS, ENTXT, DWPI, VEN, CNABS, 3GPP: 功率余量, 上报, 功率, 余量, 天线面板, 发送, 信息, 多个天线面板, Power Headroom, Reporting, Power, Headroom, Antenna Panel, Transmit, Information, Multiple Antenna Panel?

### C. DOCUMENTS CONSIDERED TO BE RELEVANT

| Category* | Citation of document, with indication, where appropriate, of the relevant passages | Relevant to claim No. |
|---|---|---|
| X | CN 113365336 A (VIVO COMMUNICATION TECHNOLOGY CO., LTD.) 07 September 2021 (2021-09-07) description, paragraphs [0021]-[0058], figures 1-8; and claims 1-25 | 1-35 |
| X | CN 109219127 A (VIVO COMMUNICATION TECHNOLOGY CO., LTD.) 15 January 2019 (2019-01-15) description, paragraph [0032]-[0117], figures 1-6; and claims 1-21 | 1-35 |
| X | CN 115669098 A (COMCAST CABLE COMMUNICATIONS, LLC) 31 January 2023 (2023-01-31) description, paragraph [0224]-[0470], and claims 1-45 | 1-35 |
| X | WO 2022147824 A1 (QUALCOMM INC.) 14 July 2022 (2022-07-14) description, paragraph [0031]-[0123], figures 1-11; and claims 1-29 | 1-35 |
| A | CN 110536397 A (ZTE CORP.) 03 December 2019 (2019-12-03) entire document | 1-35 |
| A | CN 107889209 A (HUAWEI TECHNOLOGIES CO., LTD.) 06 April 2018 (2018-04-06) entire document | 1-35 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 April 2024** | **22 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/112773**

| Patent document cited in search report | | | Publication date (day/month/year) | Patent family member(s) | | | Publication date (day/month/year) |
|---|---|---|---|---|---|---|---|
| CN | 113365336 | A | 07 September 2021 | WO | 2021175178 | A1 | 10 September 2021 |
| | | | | KR | 20220149578 | A | 08 November 2022 |
| | | | | US | 2022394631 | A1 | 08 December 2022 |
| | | | | EP | 4117350 | A1 | 11 January 2023 |
| | | | | JP | 2023515459 | A | 13 April 2023 |
| CN | 109219127 | A | 15 January 2019 | | None | | |
| CN | 115669098 | A | 31 January 2023 | WO | 2021188764 | A1 | 23 September 2021 |
| | | | | KR | 20230006816 | A | 11 January 2023 |
| | | | | EP | 4122253 | A1 | 25 January 2023 |
| | | | | US | 2021297104 | A1 | 23 September 2021 |
| | | | | US | 11689235 | B2 | 27 June 2023 |
| | | | | CA | 3112971 | A1 | 18 September 2021 |
| | | | | US | 2024056115 | A1 | 15 February 2024 |
| | | | | US | 2024022278 | A1 | 18 January 2024 |
| | | | | US | 2021297959 | A1 | 23 September 2021 |
| | | | | US | 11757483 | B2 | 12 September 2023 |
| | | | | JP | 2023518807 | A | 08 May 2023 |
| | | | | JP | 7349584 | B2 | 22 September 2023 |
| | | | | JP | 2023164993 | A | 14 November 2023 |
| WO | 2022147824 | A1 | 14 July 2022 | US | 2024030991 | A1 | 25 January 2024 |
| | | | | BR | 112023013004 | A2 | 03 October 2023 |
| | | | | KR | 20230131193 | A | 12 September 2023 |
| | | | | EP | 4275429 | A1 | 15 November 2023 |
| | | | | CN | 116686357 | A | 01 September 2023 |
| CN | 110536397 | A | 03 December 2019 | KR | 20220046578 | A | 14 April 2022 |
| | | | | MX | 2022001652 | A | 14 June 2022 |
| | | | | WO | 2021027863 | A1 | 18 February 2021 |
| | | | | TW | 202112169 | A | 16 March 2021 |
| | | | | EP | 4017144 | A1 | 22 June 2022 |
| | | | | EP | 4017144 | A4 | 23 August 2023 |
| | | | | JP | 2022543895 | A | 14 October 2022 |
| | | | | US | 2022322248 | A1 | 06 October 2022 |
| CN | 107889209 | A | 06 April 2018 | US | 2019223117 | A1 | 18 July 2019 |
| | | | | US | 10588096 | B2 | 10 March 2020 |
| | | | | EP | 3515132 | A1 | 24 July 2019 |
| | | | | EP | 3515132 | A4 | 13 November 2019 |
| | | | | EP | 3515132 | B1 | 01 September 2021 |
| | | | | AR | 109736 | A1 | 16 January 2019 |
| | | | | WO | 2018059489 | A1 | 05 April 2018 |

Form PCT/ISA/210 (patent family annex) (July 2022)